# EUROPEAN PATENT SPECIFICATION

(11) **EP 2 012 170 B1**
(45) Date of publication and mention of the grant of the patent: **15.02.2017**
(21) Application number: 07013266.7
(22) Date of filing: 06.07.2007
(51) Int. Cl.: G02B 27/01, G01S 1/70

(54) **Head-tracking system and operating method thereof**
Kopfverfolgungssystem und Betriebsverfahren dafür
Système de détection de la position de la tête et son procédé de mise en oeuvre

(43) Date of publication of application: 07.01.2009
(73) Proprietor: Harman Becker Automotive Systems GmbH, 76307 Karlsbad (DE)
(72) Inventor: Hoffmann, Jens, 67069 Ludwigshafen (DE); Hess, Wolfgang, 76307 Karlsbad (DE); Dittmann, Markus, 75433 Maulbronn (DE)
(74) Representative: Bertsch, Florian Oliver

(56) References cited:
- EP-A- 0 883 195
- WO-A-2004/100067
- GB-A- 2 347 573
- US-A- 5 742 263
- US-A1- 2005 256 675

## Description

This invention relates to a head-tracking system and a method for operating a head-tracking system. The term head-tracking system generally refers to a device attached to the head of a user which serves to detect the direction that the head faces and/or a position of the head.

### Related Art

Such head-tracking systems are for example described in US 2005/0256675 A1. In this document, a head-tracking system is attached to a head mounted display comprising a headset and a video display. Based on the direction the head faces detected by the head-tracking system, a picture displayed on the video display and/or a sound transmitted via the headset may be adjusted according to this direction, e.g. to create an impression of virtual reality.

In such head-tracking systems sensors are used to detect different types of movement of the head. For example, in the above-mentioned document a gyroscope, i.e. a gyrosensor is used which detects a turning of the head around an upright axis, i.e. an axis along the longitudinal axis of the head, or in a horizontal plane of the head.

With such a gyroscope which essentially detects an angular acceleration, a drift of the zero point may occur over time leading to an increasing impreciseness of the direction obtained by the head-tracking system.

A head tracking system is also known from EP 0 883 195 A1. This head-tracking system comprises one or more light emitters mounted to a headset and one or more stationary receivers for receiving the light emitted by the light emitters. Signals generated by the receiver in response to detecting light from the light emitters are used to determine the position of a head equipped with the head tracking system.

From WO 2004/100067 A1 a kind of head-tracking system for dental surgery is disclosed. The device of this document may include a position sensor to track the position of a head relative to a predetermined region or reference point. The position sensor may include optical tracking, acoustic tracking, inertial tracking, accelerometer tracking or magnetic field based tracking.

From US 5,742,263 or GB 2 347 573 A a method according to the preamble of claim 1 or 7 is known.

### Summary

Therefore, a need exits for a method to operate a head-tracking system and a corresponding head-tracking system, wherein such a drift is compensated, e.g. by calibration, or such a drift does not occur.

This need is met by a method according to claim 1 and a head-tracking system according to claim 7. The dependent claims define further embodiments of the method and the system, respectively.

According to an aspect of the invention a method for calibrating a head-tracking system is provided, comprising the steps of:
- emitting light from a stationary reference point,
- detecting a stationary reference point, comprising detecting said emitted light at said head-tracking system mounted to a head (11) using a two-dimensional position-sensitive device based on a pin diode, and
- determining a position of said head equipped with said head-tracking system based on said detection of said stationary reference point.

By using a stationary reference point said position may be determined without being influenced by zero drift and the like.

In an embodiment, said position is used as a reference position for a step of calibrating a detecting means for detecting a position of said head.

Said calibration step may comprise setting the zero points of a sensor of said detecting means, for example a gyroscope. Therefore, in such an embodiment a drift of the zero point may be compensated.
According to another aspect of the invention, a head-tracking system is provided, said head-tracking system comprising:
- first detecting means comprising a two-dimensional position-sensitive device based on a pin diode for detecting light emitted from a stationary reference point, and
- determining means for determining a position of a head equipped with the head-tracking system based on said detection of said stationary reference point.

This position may be used as a reference position. In such an embodiment the head-tracking system may further comprise second detecting means for detecting a position and/or movement of a head and calibration means for calibrating said second detecting means based on said reference position.

The second detecting means may comprise a gyroscope, the zero point of which may be set by said calibration means based on said detection of said stationary reference point. In such an embodiment, the gyroscope may serve to detect a yaw angle of the head.

In an embodiment, the second detecting means comprise at least one tilt sensor for detecting a pitch angle and/or a roll angle of the head.

The first detecting means may comprise an optical sensor. The optical sensor may be a position-sensitive device, for example based on a pin semiconductor structure wherein the position is determined based on lateral currents or on an array of light-sensitive sensors like CCD pixels or CMOS pixels, where the position is determined based on the illuminated pixels. With such a position-sensitive device, a position and/or direction of said stationary reference point relative to the head and thus said position of the head may be determined.

The stationary reference point may be equipped with a light-emitting device, for example a light-emitting diode, the emitted light being detected by said first detecting means. The emitted light may be modulated to enable the first detecting means to identify the light emitted from the stationary reference point.

The head-tracking system may further comprise sound reproducing means such as a headset or video display means.

### Brief Description of the Drawings

Fig. 1 is a diagram for explaining terminology used in the description of embodiments.
Fig. 2 is a further diagram for explaining terminology used in the description of embodiments.
Fig. 3 is a block diagram of an embodiment of the present invention.
Fig. 4 is a perspective view showing a further embodiment of the present invention.
Fig. 5 is a block diagram of a position-sensitive device according to an embodiment of the invention.
Fig. 6 is a diagram for explaining the functioning of a sensor of a position-sensitive device according to an embodiment of the invention.

### Detailed Description of Preferred Embodiments

In the following, embodiments of the present invention will be described with reference to the attached drawings.

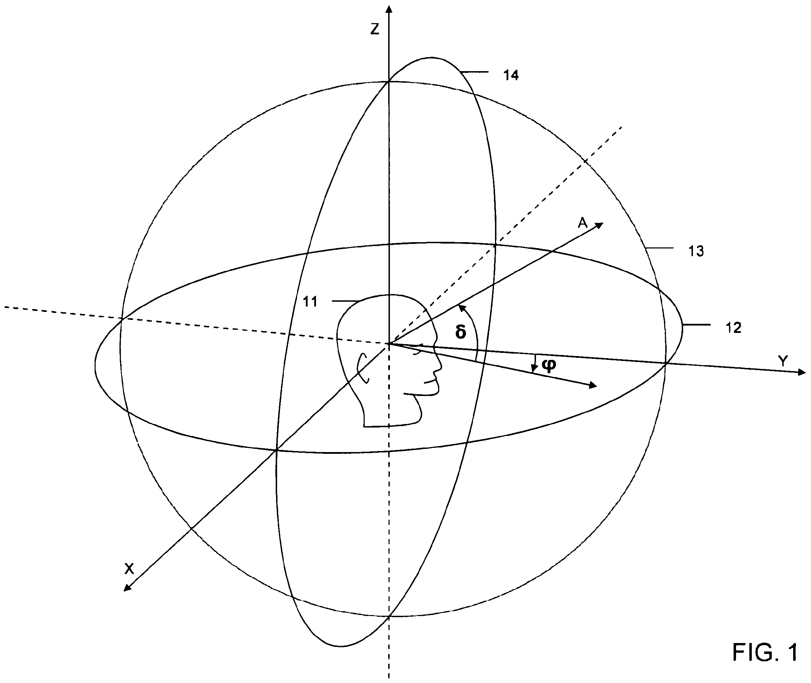

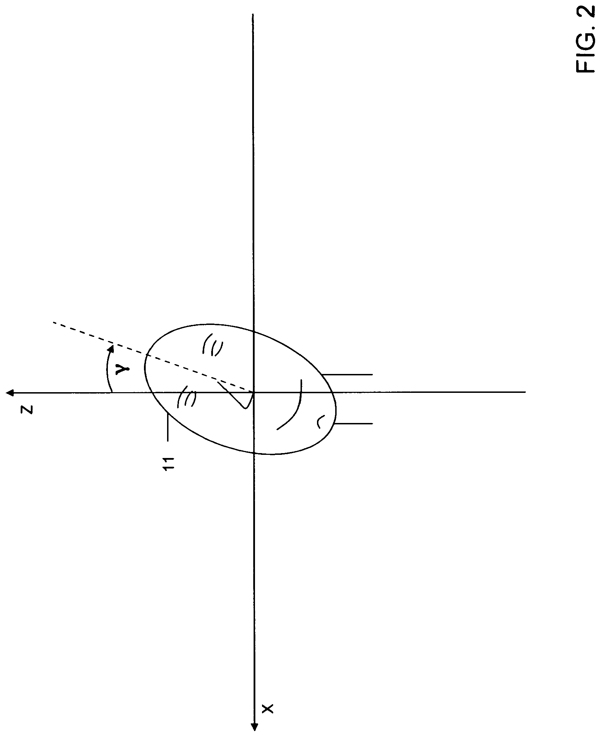

Before the actual description of embodiments, first terminology used in this description will be explained with reference to Figs. 1 and 2, wherein the terminology explained with reference to Figs. 1 and 2 is for example also explained in detail in Jens Blauert, "Spatial Hearing - the psychophysics of human sound localization", MIT Press, Cambridge MA, 1983.

The present invention relates to head-tracking systems, i.e. to systems detecting a direction in which a head of a user of the system is facing and/or a position of the head. Fig. 1 shows an exemplary head 11 together with a coordinate system which will be used in the following. In the coordinate system shown, the y-axis corresponds to the viewing direction of the head when it is looking straight forward, and the z-axis corresponds to the longitudinal axis of the head when the head is in an erect, i.e. non-tilted position. In other words, the z-axis is passing through the throat and the top of the head 11. The x-axis is perpendicular to both the y-axis and the z-axis as shown in Fig. 1.

The x-y-plane as indicated by a circle 12 in Fig. 1 will be referred to as horizontal plane, the x-z-plane as indicated by a circle 14 in Fig. 1 will be referred to as frontal plane and the y-z-plane as indicated by circle 13 will be referred to as median plane hereinafter.

The direction head 11 is facing which in an exemplary manner is shown by an arrow A in Fig. 1 may be characterized by a yaw angle, a roll angle and a pitch angle. The yaw angle characterizes a turning of the head in the horizontal plane, i.e. basically a turning around the z-axis in Fig. 1, and is indicated by ϕ in Fig. 1. The pitch angle characterizes a "nodding" motion, i.e. a turning of the head in the median plane. This angle is denoted δ in Fig. 1 and is also referred to as elevation angle.

Finally, the roll angle corresponds to a tilting of the head in the frontal plane which is schematically shown in Fig. 2. In Fig. 2, the roll angle is designated γ.

According to this coordinate system, a straight-looking head in an upright position would correspond to yaw angle, roll angle and pitch angle each being 0.

It should be noted while the embodiments explained in the following use yaw angle, roll angle and pitch angle for characterizing the direction the head is facing or the position of the head, in other embodiments other values may be used for this characterization, comprising for example the coordinates of the point where arrow A of Fig. 1 intersects a sphere with radius 1 centered around head 11.

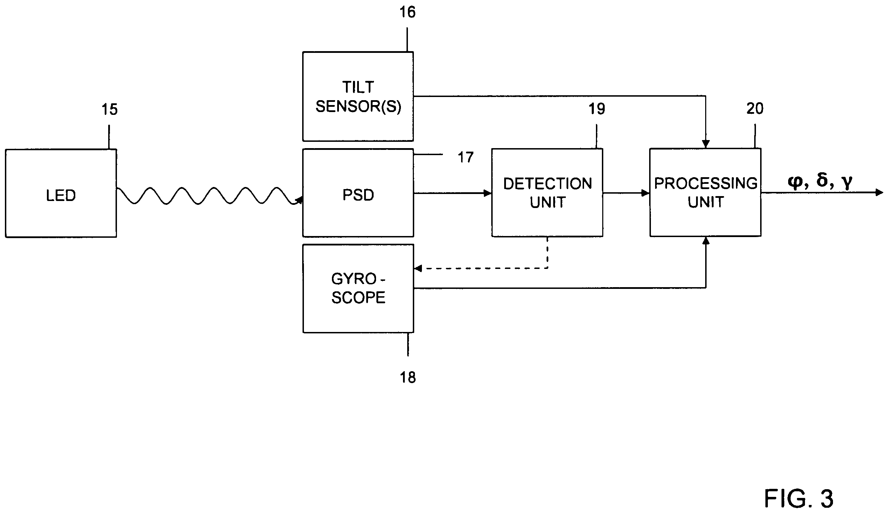

In Fig. 3, an embodiment of a head-tracking system is shown. The head-tracking system depicted in Fig. 3 comprises one or more tilt sensors 16 and a gyroscope 18 for obtaining yaw angle, roll angle and pitch angle of a head to which the head-tracking system is attached. In another embodiment, a combined 3-dimensional gyroscope/inclinometer sensor is provided which basically comprises the functionalities of tilt sensors 16 and gyroscope 18. In particular, tilt sensors 16 are used to obtain pitch angle and roll angle. In an embodiment, tilt sensors 16 use the influence of gravity on a movable element to detect the pitch angle and the roll angle. In an embodiment, a single tilt sensor for measuring both pitch angle and roll angle is provided. In another embodiment, separate one-dimensional tilt sensors arranged in a perpendicular manner are provided for determining pitch angle and roll angle separately. In an embodiment, since gravity provides a reference direction for tilt sensors 16, no calibration of these sensors, in particular no setting of their zero point, is needed.

Gyroscope 18 of the embodiment of Fig. 3 serves to detect the yaw angle of the head. Such a gyroscope basically is a sensor measuring the angular acceleration or velocity of the head in the horizontal plane. The yaw angle is then obtained by integration, which in the embodiment shown is performed by processing unit 20. Processing unit 20 is also coupled with tilt sensors 16 and outputs yaw angle ϕ, pitch angle δ and roll angel γ as result.

With such gyroscopes, a drift of the zero point corresponding to a yaw angle of 0° may occur over time.

To compensate for such a drift, the head-tracking system of the embodiment of Fig. 3 comprises a 1-dimensional or a 2-dimensional position-sensitive device (PSD) 17. Position-sensitive device 17 in this embodiment is configured to detect light emitted by a light-emitting diode (LED) unit 15 which is attached to a stationary reference point. In an embodiment, this stationary reference point is located at least approximately in a forward-looking direction (i.e. a direction where yaw angle, roll angle and pitch angle are approximately equal to 0). In such a case, when position-sensitive device 17 detects light from LED unit 15, a corresponding signal is output to detection unit 19 which, from the detected position of LED unit 15, obtains a calibration signal setting the zero point. For example, in an embodiment when the light from LED unit 15 is received at the center of position-sensitive device 17, detection unit 19 decides that the head is looking exactly in a forward direction and sends a corresponding signal to processing unit 20 to set the momentarily detected yaw angle to 0. Depending on the exactness of the calibration needed, in other embodiments the yaw angle may be set to 0 if the light from LED unit 15 is detected at any position of position-sensitive device 17, or a calculation may be performed to obtain the zero direction from the position the light is detected on position-sensitive device 17. In yet other embodiments, the reference point where LED unit 15 is attached deviates from the forward-looking direction by an amount stored in detection unit 19 and/or processing unit 20.

Therefore, by using an extended position-sensitive device 17, a zero point may also be set if the head to which the head-tracking system is attached does not exactly assume the zero position, i.e. the forward-looking position. Embodiments of position-sensitive devices will be discussed later.

In the embodiment as explained above, detection unit 19 feeds a calibration signal to processing unit 20. As indicated by a dashed arrow in Fig. 3, such a calibration signal may also be fed directly to gyroscope 18, for example if gyroscope 18 itself integrates the measured accelerations and/or velocities and directly outputs the yaw angle. Furthermore, while in the embodiment of Fig. 3 tilt sensors 16 are used for determining roll and pitch angles, in other embodiments gyroscopes may also be used for detecting roll and pitch angles. In this case, the calibration for these sensors may be performed in the same manner as for gyroscope 18.

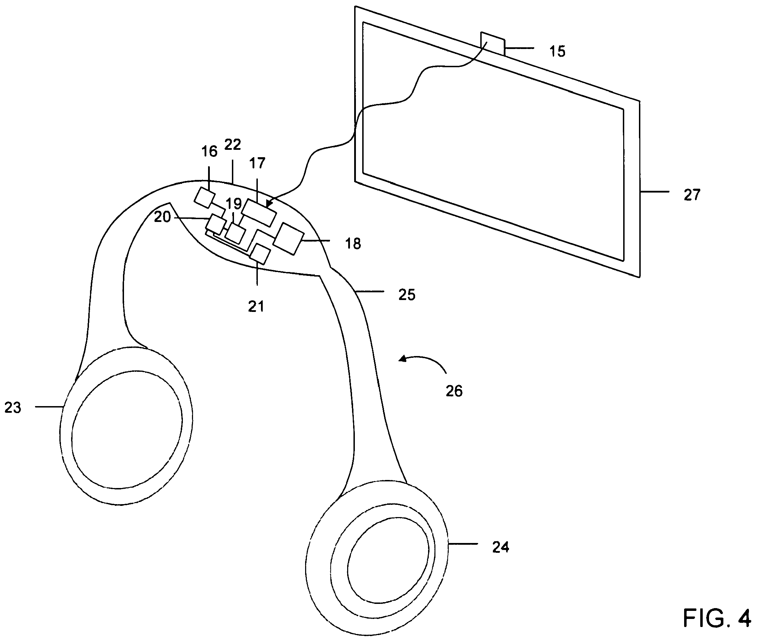

In Fig. 4, a further embodiment of a head-tracking system which is based on the embodiment of Fig. 3 is shown. In the embodiment of Fig. 4 the head-tracking system which comprises elements 16-20 already discussed with reference to Fig. 3 is attached at a top point of a headphone or a headset 26 comprising a holder 25 and a pair of earphones 23, 24. Furthermore, in the embodiment shown in Fig. 4 LED unit 15 is attached at the top of a display 27, which for example may be a flat screen display or a cathode ray tube. When a user wearing the headphone 26 faces in the direction of display 27, position-sensitive device 17 receives light from LED unit 15 indicating that the user at least approximately looks in a forward direction.

As already mentioned, the position-sensitive device 17 of this embodiment has an extended sensor area providing for the detection of a position where the sensor receives light from LED unit 15. Through this extended sensors the system may also correctly detect the light and set the zero point at least approximately correctly when for example a user does not put the headset 26 on straight, but in a slightly tilted manner or does not look exactly in the forward direction.

In the embodiment shown in Fig. 4, a transmitter 21 is connected to processing unit 20. Transmitter 21 serves to transmit the detected yaw, pitch and roll angles to a further device (not shown) which uses this information. In the embodiment of Fig. 4, this further device may comprise an audio device producing sound signals for headset 26 and/or a video device generating video signals for display 27. In such an embodiment, the sound reproduced by headset 26 and/or the picture displayed by display 27 may be varied depending on the head position detected by the head-tracking system.

In case headset 26 is a wireless headset which receives the sound signals in a wireless manner, for example using infrared or HF transmission, transmitter 21 may in an embodiment be integrated in a corresponding transmission system. Likewise, if headset 26 receives sound signals via a wire, transmitter 21 may use this wire or a dedicated wire for transmitting the results obtained by the head-tracking system.

It should be noted that in other embodiments the components of the head-tracking system may be attached to headset 26 in other position than the one shown. Furthermore, the head-tracking system may be used independently from a headset. In such a case, any other means for attaching the headset to a head of a user, for example an elastic band, may be provided. Such an embodiment may for example be used when sounds are not reproduced via a headset as shown in Fig. 4, but wire loudspeakers.

In still other embodiments, instead of a stationary display like display 27 in Fig. 4 a display may be attached to headset 26. In this case, LED unit 15 may for example be attached to a wall to provide a stationary reference point.

In the embodiments of Figs. 3 and 4, the position information obtained through the position-sensitive device 17 is used for calibrating gyroscope 18. In another embodiment, alternatively or additionally this position information is directly used to obtain pitch angle, roll angle and/or yaw angle. In this case, in an embodiment the respective sensor(s) 16, 18 used in the embodiments of Figs. 3 and 4 may be omitted.

Further modifications are possible in other embodiments. For example, in an embodiment tilt sensors 16 may be omitted. In this case, the head-tracking device only detects the yaw angle. Also, detection unit 19 and processing unit 20 may be implemented both as separate units and as a single processing unit, for example using a microprocessor.

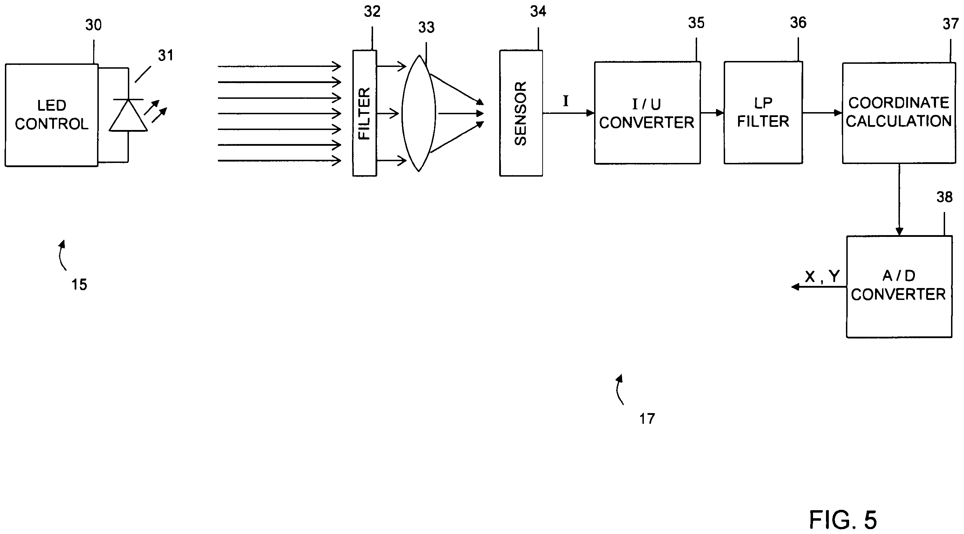

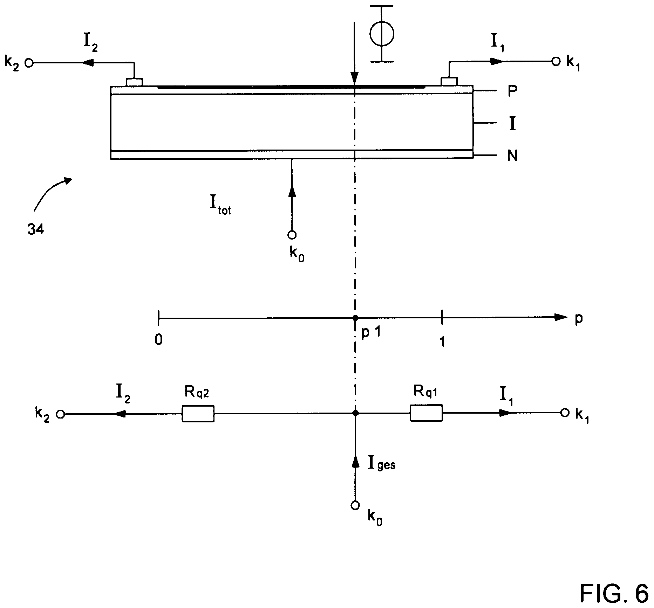

Next, embodiments of position-sensitive device 17 and LED unit 15 will be explained in greater detail with reference to Figs. 5 and 6.

In Fig. 5, a block diagram of LED unit 15 and position-sensitive device 17 is shown. In the embodiment of Fig. 5, LED unit 15 comprises a LED control 30 and a light-emitting diode 31. In an embodiment, light-emitting diode 31 is an infrared diode such that the light emitted by light-emitting diode 31 does not disturb a user of the head-tracking system. However, in other embodiments light-emitting diodes emitting visible light may also be used. In still other embodiments other light emitters than LEDs may be used.

In an embodiment, LED control 30 is a power supply supplying light-emitting diode (LED) 31 with power. In another embodiment, LED control 30 comprises a modulation circuit for modulating the light emitted by LED 31 according to a predetermined pattern. With such a modulation, light emitted from LED 31 may be discerned from light emitted from other sources.

Next, the embodiment of position-sensitive device 17 shown in Fig. 5 will be discussed. In this embodiment, position-sensitive device 17 comprises an optical filter 32 for filtering the light received. In case LED 31 is an infrared LED, optical filter 32 may for example be a filter which is transparent to infrared light but opaque for light of other wavelengths, such as visible light. Optical filter 32 may be fine-tuned to the wavelength of LED 31 so as to let only light of a corresponding wavelength pass.

Optical filter 32 in the embodiment shown is followed by an optical system 33 comprising one or more lenses for focusing the light received and filtered on sensor 34. In an embodiment, the center of gravity of the focused light beam on sensor 34 is taken as position of the light beam. An implementation of sensor 34 according to an embodiment will be explained with reference to Fig. 6.

In the upper part of Fig. 6, a cross-sectional view of sensor 34 is shown. In this embodiment, sensor 34 comprises an extending pin structure, p indicating a p-doped semiconductor layer, i designating a nominally undoped or low-doped (insulating) semiconductor layer and n designating an n-doped semi-conductor layer. A back contact ko is coupled with the n-doped layer of the structure approximately in a middle thereof, and at opposing sides contacts k₁ and k₂ contact the p-doped layer. In order to provide a two-dimensional sensing, additional contacts (not shown) are provided in a direction perpendicular to the one shown.

Such a device uses the so-called lateral photo effect for position sensing. A total current is supplied via contact ko. An arrow labeled Φ indicates a position where light falls on the sensor. At the area where light falls on the sensor, the device becomes conducting in a transverse direction (up-down-direction in Fig. 6). In the p-axis in the middle of Fig. 6, this location is designated p₁.

Assuming that the resistance of the n-doped layer is low, the resistance from ko to k₁ (Rq1 and Rq2, respectively, as shown in the lower part of Fig. 6) are determined by the position p₁ where light falls on the sensor. Therefore, currents I₁, I₂ detected at k₁, k₂, respectively, are indicative of the position. In particular, in the dimension shown the position p₁ relative to the middle of the sensor is proportional to (I₁-I₂)/(I₁+I₂).

Similar considerations hold true for two-dimensional sensor. More information regarding this and other position-sensitive devices may be taken from Makinen, "Position-Sensitive Devices and Sensor Systems for Optical Tracking and Displacement-Sensing Applications", ISBN 1951-42-5770.

With position-sensitive devices as the one shown in Fig. 6, the above-given ratio of currents does not depend on the light intensity received by the sensor, such that the distance from LED 31 of the position-sensitive device generally does not influence the result.

Returning now to Fig. 5, the currents (for example current I₁, I₂ explained with reference to Fig. 6) output by sensor 34 are supplied to a current voltage converter 35 which converts the current into voltages. This for example may be achieved by measuring the voltage drop of a resistor having a known resistance through which the respective current flows. The thus generated voltages are then filtered by a low-pass filter 36 serving to reduce noise followed by an analog coordinate calculation unit 37 which calculates the coordinates of the light received on sensor 34 based on the above-mentioned current ratios, for example using operational amplifiers. In case LED control 30 uses a modulation as described above, coordinate calculation unit 37 also performs a corresponding demodulation such that only light actually received from LED 31 is considered. In the embodiment shown, coordinate calculation unit is followed by an analog-to-digital converter which converts the calculated coordinates to digital values X, Y indicating the position of the light received on sensor 34.

It has to be understood that the embodiment shown in Fig. 5 serves only as an example, and many modifications are possible. For example, while in the embodiment of Fig. 5 analog-to-digital converter 38 is positioned downstream of coordinate calculation unit 37, it also may be positioned between current voltage converter 35 and low-pass filter 36, in which case low-pass filter 36 would be a digital filter and coordinate calculation unit 37 a digital calculation unit (and possible demodulation unit), or between low-pass filter 36 and coordinate calculation 37. In still other embodiments, no analog-to-digital-converter is provided, and analog signals are output to be processed by detection unit 19 of Fig. 3. In another embodiment, instead of low-pass filter 36 a band-pass filter is provided. In still another embodiment, additionally or alternatively to optical filter 32 an electrical filter is provided which may be arranged upstream or downstream of current voltage converter 35. Such an electrical filter may be an active filter or a passive filter, a single filter, a cascaded filter system or any other kind of suitable filter.

When using such a camera-type sensor, instead of using a light source like LED 31 a different kind of marker, for example a cross, may be used, which is then recognized by a picture recognition algorithm.

## Claims

1. A method for operating a head-tracking system, said method comprising:
- emitting light from a stationary reference point,
- detecting said stationary reference point, comprising detecting said emitted light at said head-tracking system mounted to a head (11), and
- determining a position of said head (11) equipped with said head-tracking system based on said detected reference point,
**characterized in that** said detecting said emitted light is performed using a two-dimensional position-sensitive device based on an extending pin structure using the lateral photo effect for two-dimensional position sensing.

2. The method according to claim 1,
wherein said determined position is a reference position, said method further comprising:
- calibrating a detecting means for detecting a position of said head based on said reference position.

3. The method according to claim 2,
wherein said calibrating step comprises setting a zero point of said detecting means.

4. The method according to any one of the preceding claims,
wherein said detecting step comprises determining a position where light from said reference point reaches said head-tracking system.

5. The method according to any one of the preceding claims,
wherein said emitting step comprises modulating the emitted light at a predetermined pattern.

6. The method according to any one of the preceding claims,
wherein said determined position comprises information indicative of a direction said head (11) is facing.

7. A head-tracking system, comprising:
- first detecting means (17, 19) for detecting light emitted from a stationary reference point (15), and
- determining means for determining a position of a head (11) equipped with said head-tracking system based on said detected reference point, **characterized in that** said first detecting means comprise a two-dimensional position-sensitive device (17) based on an extending pin structure using the lateral photo effect for two-dimensional position sensing.

8. The head-tracking system according to claim 7,
wherein said determining means are adapted to determine a reference position of said head,
said head-tracking system further comprising:
- second detecting means (16, 18) for detecting a position of said head (11), and
- calibration means (20) for calibrating said second detecting means (18) based on said reference position.

9. The head-tracking system according to claim 8,
wherein said second detecting means comprise a gyroscope (18), wherein said calibration means are adapted for setting a zero point of said gyroscope (18).

10. The head-tracking system according to claim 8 or 9,
wherein said second detecting means comprise at least one tilt sensor (16).

11. The head-tracking system according to any one of claims 7-10, further comprising a headset (26),
wherein said first detecting means are attached to said headset (26).

12. The head-tracking system according to any one of claims 7-11,
wherein said position determined by said determining means comprises information indicative of a direction said head is facing.

13. The head-tracking system according to any one of claims 7-12,
wherein the head-tracking system is configured to carry out the method according to any one of claims 1-7.

14. A system, comprising:
the head-tracking system according to any one of claims 7-13, and
a light emitter (15) to be attached to said stationary reference point.

15. The system according to claim 14,
wherein said light emitter comprises a light-emitting diode (31).

16. The system according to claim 14 or 15,
wherein said light emitter is configured to emit light in the infrared spectrum.

17. The system according to any one of claims 14-16,
wherein said light emitter (15) comprises a modulation circuit (30) for modulating light emitted by said emitter (15).

## Patentansprüche

1. Verfahren zum Betreiben eines Kopfverfolgungssystems, wobei das Verfahren Folgendes umfasst:
- Ausstrahlen von Licht von einem stationären Bezugspunkt,
- Detektieren des stationären Bezugspunkts, umfassend das Detektieren des ausgestrahlten Lichts an dem Kopfverfolgungssystem, das an einem Kopf (11) befestigt ist und
- Ermitteln einer Position des Kopfes (11), der mit dem Kopfverfolgungssystem ausgestattet ist, auf Grundlage des detektieren Bezugspunkts,
**dadurch gekennzeichnet, dass** das Detektieren des ausgestrahlten Lichts unter Verwendung einer zweidimensionalen positionsempfindlichen Vorrichtung auf Grundlage einer sich erstreckenden Stiftstruktur unter Verwendung des lateralen Photoeffekts für die zweidimensionale Positionserfassung durchgeführt wird.

2. Verfahren nach Anspruch 1,
wobei die ermittelte Position ein Bezugspunkt ist, wobei das Verfahren ferner Folgendes umfasst:
- Kalibrieren eines Detektionsmittels zum Detektieren einer Position des Kopfes auf Grundlage des Bezugspunkts.

3. Verfahren nach Anspruch 2,
wobei der Kalibrierungsschritt das Einstellen eines Nullpunkts des Detektionsmittels umfasst.

4. Verfahren nach einem der vorhergehenden Ansprüche,
wobei der Detektionsschritt das Ermitteln einer Position umfasst, bei der Licht von dem Bezugspunkt das Kopfverfolgungssystem erreicht.

5. Verfahren nach einem der vorhergehenden Ansprüche,
wobei der Ausstrahlschritt das Modulieren des ausgestrahlten Lichts mit einem vorbestimmten Muster umfasst.

6. Verfahren nach einem der vorhergehenden Ansprüche,
wobei die ermittelte Position Informationen umfasst, die für eine Richtung bezeichnend sind, in die der Kopf (11) zeigt.

7. Kopfverfolgungssystem, umfassend:
- erste Detektionsmittel (17, 19) zum Detektieren von Licht, das von einem stationären Bezugspunkt (15) ausgestrahlt wird und
- Ermittlungsmittel zum Ermitteln einer Position eines Kopfes (11), der mit dem Kopfverfolgungssystem ausgestattet ist, auf Grundlage des detektierten Bezugspunkts,
**dadurch gekennzeichnet, dass** die ersten Detektionsmittel eine zweidimensionale positionsempfindliche Vorrichtung (17) auf Grundlage einer sich erstreckenden Stiftstruktur unter Verwendung des lateralen Photoeffekts für die zweidimensionale Positionserfassung umfassen.

8. Kopfverfolgungssystem nach Anspruch 7,
wobei die Ermittlungsmittel angepasst sind, um eine Bezugsposition des Kopfes zu ermitteln,
wobei das Kopfverfolgungssystem ferner Folgendes umfasst:
- zweite Detektionsmittel (16, 18) zum Detektieren einer Position des Kopfes (11) und
- Kalibrierungsmittel (20) zum Kalibrieren des zweiten Detektionsmittels (18) auf Grundlage ihrer Bezugsposition.

9. Kopfverfolgungssystem nach Anspruch 8,
wobei die zweiten Detektionsmittel ein Gyroskop (18) umfassen, wobei die Kalibrierungsmittel angepasst sind, um einen Nullpunkt des Gyroskops (18) einzustellen.

10. Kopfverfolgungssystem nach Anspruch 8 oder 9,
wobei die zweiten Detektionsmittel mindestens einen Neigungssensor (16) umfassen.

11. Kopfverfolgungssystem nach einem der Ansprüche 7-10, ferner umfassend ein Headset (26), wobei die ersten Detektionsmittel an dem Headset (26) befestigt sind.

12. Kopfverfolgungssystem nach einem der Ansprüche 7-11,
wobei die Position, die durch die Ermittlungsmittel ermittelt wird, Informationen umfasst, die für eine Richtung bezeichnend sind, in die der Kopf zeigt.

13. Kopfverfolgungssystem nach einem der Ansprüche 7-12,
wobei das Kopfverfolgungssystem konfiguriert ist, um das Verfahren nach einem der Ansprüche 1-7 auszuführen.

14. System, umfassend:
das Kopfverfolgungssystem nach einem der Ansprüche 7-13 und einen Lichtsender (15), der an dem stationären Bezugspunkt befestigt werden soll.

15. System nach Anspruch 14,
wobei der Lichtsender eine Leuchtdiode (31) umfasst.

16. System nach Anspruch 14 oder 15,
wobei der Lichtsender konfiguriert ist, um Licht in dem Infrarotspektrum auszustrahlen.

17. System nach einem der Ansprüche 14-16,
wobei der Lichtsender (15) eine Modulationsschaltung (30) zum Modulieren von Licht umfasst, das von dem Sender (15) ausgestrahlt wird.

## Revendications

1. Procédé permettant le fonctionnement d'un système de détection de la position de la tête, ledit procédé comprenant :
- l'émission d'une lumière à partir d'un point de référence stationnaire,
- la détection dudit point de référence stationnaire, comprenant la détection de ladite lumière émise au niveau dudit système de détection de la position de la tête monté sur une tête (11), et
- la définition d'une position de ladite tête (11) équipée avec ledit système de détection de la position de la tête sur la base dudit point de référence stationnaire détecté,
**caractérisé en ce que** ladite détection de ladite lumière émise est réalisée à l'aide d'un dispositif sensible à la position bidimensionnelle sur la base d'une structure de broche se prolongeant utilisant l'effet photo latéral pour la capture de la position bidimensionnelle.

2. Procédé selon la revendication 1,
dans lequel ladite position définie est une position de référence, ledit procédé comprenant en outre :
- l'étalonnage d'un moyen de détection pour détecter une position de ladite tête sur la base de ladite position de référence.

3. Procédé selon la revendication 2,
dans lequel l'étape d'étalonnage comprend le réglage d'un point zéro dudit moyen de détection.

4. Procédé selon l'une quelconque des revendications précédentes,
dans lequel ladite étape de détection comprend la définition d'une position où la lumière provenant dudit point de référence atteint ledit système de détection de la position de la tête.

5. Procédé selon l'une quelconque des revendications précédentes,
dans lequel ladite étape d'émission comprend la modulation de la lumière émise selon un motif prédéfini.

6. Procédé selon l'une quelconque des revendications précédentes,
dans lequel ladite position définie comprend des informations indiquant une direction vers laquelle ladite tête (11) est tournée.

7. Système de détection de la position de la tête, comprenant :
- des premiers moyens de détection (17, 19) permettant de détecter une lumière émise à partir d'un point de référence stationnaire (15), et
- des moyens de définition permettant de définir une position d'une tête (11) équipée avec ledit système de détection de la position de la tête sur la base dudit point de référence détecté,
**caractérisé en ce que** lesdits premiers moyens de détection comprennent un dispositif sensible à la position bidimensionnelle (17) sur la base d'une structure de broche se prolongeant utilisant l'effet photo latéral pour la capture de position bidimensionnelle.

8. Système de détection de la position de la tête selon la revendication 7,
dans lequel lesdits moyens de définition sont adaptés pour définir une position de référence de ladite tête, ledit système de détection de la position de la tête comprenant en outre :
- des seconds moyens de détection (16, 18) permettant de détecter une position de ladite tête (11), et
- des moyens d'étalonnage (20) permettant d'étalonner ledit second moyen de détection (18) sur la base de ladite position de référence.

9. Système de détection de la position de la tête selon la revendication 8,
dans lequel lesdits seconds moyens de détections comprennent un gyroscope (18), dans lequel lesdits moyens d'étalonnage sont adaptés pour régler un point zéro dudit gyroscope (18).

10. Système de détection de la position de la tête selon la revendication 8 ou 9,
dans lequel lesdits seconds moyens de détection comprennent au moins un capteur d'inclinaison (16).

11. Système de détection de la position de la tête selon l'une quelconque des revendications 7 à 10, comprenant en outre un casque (26),
dans lequel lesdits premiers moyens de détection sont fixés audit casque (26).

12. Système de détection de la position de la tête selon l'une quelconque des revendications 7 à 11,
dans lequel ladite position définie par lesdits moyens de définition comprend des informations indiquant une direction vers laquelle ladite tête est tournée.

13. Système de détection de la position de la tête selon l'une quelconque des revendications 7 à 12,
dans lequel le système de détection de la position de la tête est configuré pour mettre en oeuvre le procédé selon l'une quelconque des revendications 1 à 7.

14. Système, comprenant :
le système de détection de la position de la tête selon l'une quelconque des revendications 7 à 13, et
un émetteur de lumière (15) à fixer audit point de référence stationnaire.

15. Système selon la revendication 14,
dans lequel l'émetteur de lumière comprend une diode électroluminescente (31).

16. Système selon la revendication 14 ou 15,
dans lequel l'émetteur de lumière est configuré pour émettre de la lumière dans le spectre infrarouge.

17. Système selon l'une quelconque des revendications 14 à 16,
dans lequel ledit émetteur de lumière (15) comprend un circuit de modulation (30) permettant de moduler la lumière émise par ledit émetteur (15).
